# FASCICULE DE BREVET EUROPEEN

(11) **EP 3 164 284 B1**
(45) Date de publication et mention de la délivrance du brevet: **19.05.2021**
(21) Numéro de dépôt: 15756962.5
(22) Date de dépôt: 02.07.2015
(51) Int. Cl.: B60J 5/10

(54) **VÉHICULE AUTOMOBILE COMPRENANT UN HAYON PIVOTANT**
KRAFTFAHRZEUG UMFASSEND EINE DREHBARE HECKKLAPPE
MOTOR VEHICLE COMPRISING A PIVOTING TAILGATE

(30) Priorité: 02.07.2014 IN 3256CH2014; 13.08.2014 FR 1457786
(43) Date de publication de la demande: 10.05.2017
(73) Titulaire: Renault S.A.S., 92100 Boulogne-Billancourt (FR)
(72) Inventeur: NATH, Sandeep, Krishnapur Kolakata 700102 (IN); GODAVARI, Balaji Sai Kiran, Hyderabad Serilingampally (IN); JHA, Brijesh, New Delhi 110037 (IN)
(86) Numéro de dépôt international: PCT/FR2015/051829
(87) Numéro de publication internationale: WO 2016/001593

(56) Documents cités:
- DE-A1-102006 059 985
- DE-U1- 20 018 730
- FR-A1- 2 717 215
- FR-A1- 2 821 110

## Description

L'invention se rapporte aux véhicules automobiles dotés d'un hayon pivotant.

L'invention se rapporte plus particulièrement au lien mécanique entre la caisse du véhicule et le hayon.

De manière conventionnelle, un hayon est constitué d'une porte fixée par son côté inférieur à la caisse du véhicule. En conséquence, il est possible d'ouvrir le hayon en entraînant celui-ci en rotation vers l'extérieur et vers le bas autour d'un arbre horizontal.

Toutefois, de tels hayons peuvent interférer avec des pièces de carrosserie en plastique du véhicule telles que le pare-choc arrière

Les documents FR 2821110, FR 2717215, DE 20018730 et DE 102006059985 présentent des systèmes de fermeture de véhicule automobile. Ces documents illustrent l'arrière-plan technologique de l'invention.

Une solution consiste à modifier le pare-choc arrière, en vue de libérer un espace à l'intérieur duquel le hayon peut venir s'insérer lorsqu'il est en position ouverte, sans causer d'interférence avec le pare-choc arrière. Cependant, cette solution peut compromettre la sécurité et l'aspect esthétique général du véhicule.

Selon un premier aspect de l'invention, un véhicule automobile comprend une caisse comportant un pare-choc arrière, un hayon disposé à proximité du côté supérieur du pare-choc arrière. Le hayon est lié à la caisse au moyen d'au moins un lien mécanique capable de pivoter autour d'un axe horizontal.

Le lien mécanique comprend une tige solidaire du hayon et libre de se déplacer en translation à l'intérieur d'un manchon rotatif pouvant être actionné par le mouvement de rotation du lien mécanique autour de l'axe horizontal.

Au moyen d'un tel lien mécanique, on peut d'une part faire tourner le hayon par rapport à la caisse du véhicule autour de l'axe horizontal et d'autre part entraîner celui-ci en translation selon la direction de la tige.

En conséquence, il est possible, lorsqu'on ouvre le hayon, de déplacer celui-ci vers l'extérieur de la caisse du véhicule afin d'éviter toute interférence avec le pare-choc.

Avantageusement, l'axe horizontal et le manchon rotatif comprennent respectivement un premier pignon conique et un deuxième pignon conique, les premier et deuxième pignons coniques étant capables d'engrener l'un avec l'autre. En conséquence, l'ouverture du hayon rotatif entraîne automatiquement le déplacement en translation dudit hayon vers l'extérieur de la caisse du véhicule.

De préférence, la tige peut comprendre un filetage hélicoïdal externe, le manchon rotatif comprenant un filetage hélicoïdal interne, les filetages hélicoïdaux externe et interne étant tous deux capables d'engrener l'un avec l'autre.

Au moyen d'un tel dispositif, la translation du hayon vers l'extérieur et vers l'intérieur de la caisse du véhicule est actionnée par sa propre rotation durant l'ouverture ou la fermeture dudit hayon.

Avantageusement, un bras de guidage peut être disposé entre l'axe horizontal et le manchon rotatif, le bras de guidage comprenant un premier palier rotatif lié à l'axe horizontal et un deuxième palier rotatif lié au manchon rotatif.

Selon un mode de réalisation, l'axe horizontal s'étend sur la partie arrière de la caisse du véhicule, le hayon étant relié à la caisse par deux liens mécaniques symétriques, chaque lien mécanique étant disposé à une extrémité de l'axe horizontal.

Dans un autre mode de réalisation, les tiges des deux liens mécaniques peuvent être montées solidaires d'un membre de fixation commun incorporé à l'intérieur du hayon.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue de face d'un hayon depuis l'intérieur d'un véhicule,
- la figure 2 est une vue de côté du véhicule de la figure 1, le hayon étant en position fermée,
- la figure 3 est une vue de côté du véhicule de la figure 1, le hayon étant en position ouverte, et
- la figure 4 est une vue de dessus d'un autre mode de réalisation dans lequel le hayon est en position ouverte.

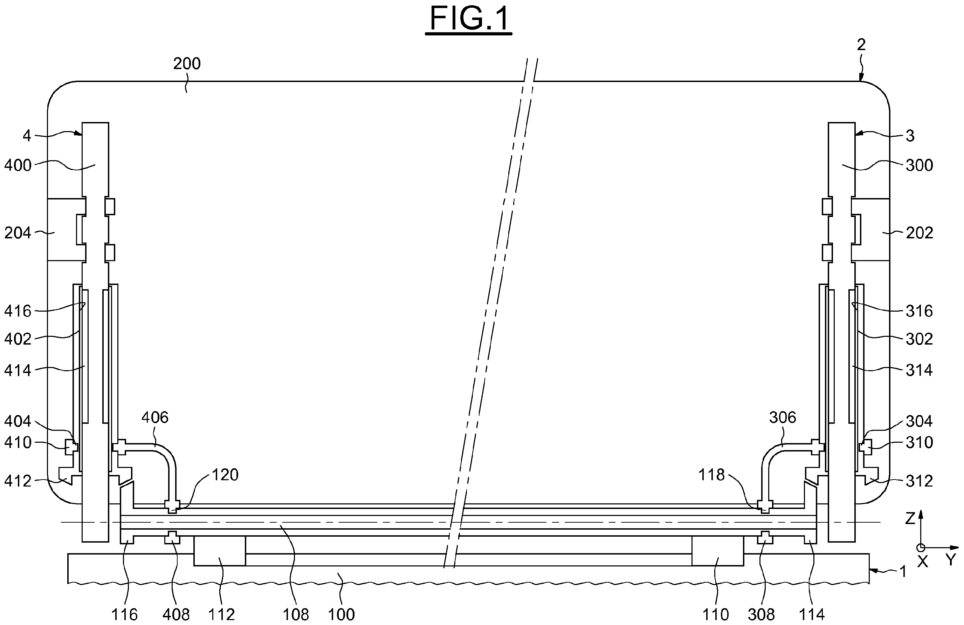

Par la suite, les termes « longitudinal », « transversal », « vertical », « avant », « arrière », « gauche », et « droit » sont définis en accord avec le repère orthogonal de référence des véhicules automobiles, représenté sur les figures 1 à 4, comprenant :
- un axe longitudinal X, horizontal et dirigé depuis l'arrière vers l'avant du véhicule,
- un axe transversal Y, horizontal, perpendiculaire à l'axe longitudinal X et dirigé depuis la gauche vers la droite du véhicule lorsque le véhicule se déplace en avant,
- un axe vertical Z, orthogonal aux axes longitudinal X et transversal Y.

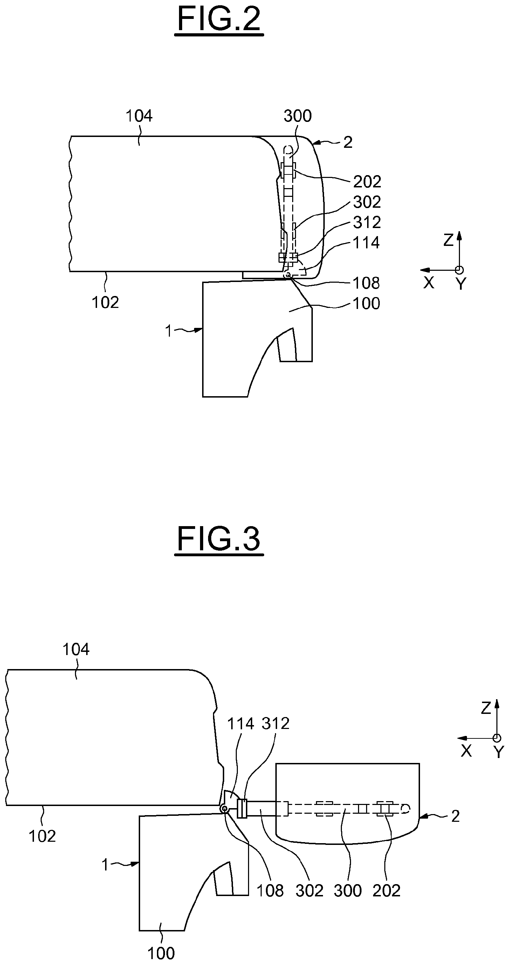

Les figures 1 à 3 illustrent un premier mode de réalisation d'un véhicule comprenant un hayon représenté en position fermé, sur les figures 1 et 2, ou en position ouverte, sur la figure 3. Le véhicule comprend une caisse 1, liée à un hayon 2 au moyen de deux liens mécaniques 3 et 4.

A l'arrière du véhicule, la caisse 1 comprend un pare-choc arrière 100 qui lui est fixé sous un plancher arrière 102. Le plancher arrière 102 est situé entre deux panneaux latéraux 104 et 106. Seul le panneau latéral gauche 104 est visible sur les figures 2 et 3. La caisse 1 comprend un axe horizontal 108 s'étendant selon une direction horizontale le long de l'axe transversal Y. Comme cela est visible sur la figure 1, l'axe 108 a une forme cylindrique et s'étend sur le long du côté supérieur du pare-choc arrière 100.

L'axe 108 est fixé à la caisse 1 au moyen d'un support de fixation gauche 110 (sur la droite par rapport à la figure 1) et d'un support de fixation droit 112.

L'axe 108 comprend deux pignons coniques 114 et 116 à ses extrémités. Comme cela est visible sur les figures 2 et 3, les pignons 114 et 116 sont des pignons ayant la forme d'un arc de cercle d'environ 90°. En d'autres termes, ils s'étendent seulement sur un quart de cercle.

L'axe 108 comprend également deux gorges circulaires 118 et 120 à proximité de ses extrémités respectives.

Le hayon 2 comprend une paroi interne 200 disposée de telle sorte que sa partie inférieure se trouve à proximité du côté supérieur du pare-choc arrière 100. Deux éléments d'attache 202 et 204 sont solidaires de la paroi interne 200, respectivement situés sur le côté gauche et sur le côté droit du hayon 2.

Les deux liens mécaniques 3 et 4 sont disposés de façon symétrique à chaque extrémité respective de l'axe 108, le lien mécanique 3 étant disposé sur le côté gauche du véhicule et le lien mécanique 4 étant disposé sur le côté droit du véhicule.

Les liens 3 et 4 étant symétriques, on se limitera à la description du seul lien mécanique 3. Pour une meilleure compréhension, tout élément du lien droit 4 qui est identique à un élément référencé 30x du lien mécanique 3 est référencé 40x.

On peut, sans sortir du cadre de l'invention, envisager un autre mode de réalisation, dans lequel seul un lien mécanique est disposé, soit à l'une des extrémités de l'axe 108, soit sur sa partie centrale.

Dans le mode de réalisation illustré sur la figure 1, le lien mécanique 3 est lié à la caisse 1 de telle sorte qu'il soit capable de pivoter autour de l'axe 108. Le lien mécanique 3 comprend une tige 300 fixée à la paroi interne 200 du hayon 2 au moyen de l'élément d'attache 202. La tige 300 est capable de se déplacer en translation à l'intérieur d'un manchon rotatif 302. Le manchon rotatif 302 comprend une gorge circulaire 304 coopérant avec une extrémité d'un arbre de guidage 306 disposé entre l'axe 108 et le manchon rotatif 302.

Le bras de guidage 306 a une forme pliée et comprend à une extrémité un premier palier rotatif 308 monté rotatif sur l'axe 108 et un second palier rotatif 310 monté rotatif sur la gorge 304 du manchon rotatif 302.

Dans cet exemple, les paliers rotatifs 308 et 310 sont des coussinets respectivement disposés en face des gorges circulaires 118 et 304.

Au moyen de l'arbre de guidage 306 précité, le manchon rotatif 302 est capable de pivoter autour de l'axe 108. Ce mouvement de rotation est actionné par le mouvement de rotation du lien mécanique 3 autour de l'axe 108 durant l'ouverture et la fermeture du hayon 2.

Lorsque le manchon rotatif 302 pivote autour de l'axe 108, il tourne également autour de son propre axe, en raison de la présence à son extrémité inférieure d'un pignon conique 312 capable d'engrener avec le pignon conique gauche 114 de l'axe 108.

Au moyen d'une telle disposition, le mouvement de rotation du manchon rotatif 302 autour de l'axe 108 entraîne la rotation du manchon 302 autour de son propre axe.

En outre, la tige 300 comprend un filetage hélicoïdal externe 314. Le manchon rotatif 302 comprend également un filetage hélicoïdal interne 316 capable d'engrener avec le filetage hélicoïdal externe 314.

Les filetages hélicoïdaux 314 et 316 sont conçus de telle sorte que la rotation du manchon rotatif 302 autour de son propre axe entraîne la tige 300 en translation par rapport au manchon 302.

Une telle disposition permet d'entraîner le hayon 2 vers l'extérieur du véhicule lors de l'ouverture de celui-ci et vers l'intérieur du véhicule lors de sa fermeture.

Ce faisant, on évite les interférences entre le hayon 2 et les éléments de la caisse tels que le pare-choc arrière 100. Cela permet d'incorporer un hayon sur un véhicule sans modifier son pare-choc arrière.

On se réfèrera aux figures 2 et 3 pour expliquer l'ouverture du hayon 2.

Dans un premier temps, comme cela est représenté sur la figure 2, le hayon 2 est en position fermée, cachant le lien mécanique 3 (représenté en ligne pointillée). La tige 300 du lien mécanique 3 est positionnée à la verticale de l'axe 108.

Pour ouvrir le hayon 2, celui-ci doit être entraîné dans un mouvement de rotation de 90° dans le sens des aiguilles d'une montre (par rapport aux figures 2 et 3). Les liens mécaniques 3 et 4 sont tous deux entraînés dans le même mouvement de rotation que le hayon 2. L'engrenage constitué du pignon conique 312 du manchon rotatif 302 et du pignon conique 114 de l'axe 108 génère alors un mouvement de rotation du manchon 302 autour de son propre axe. De manière symétrique, le manchon 402 est entraîné en rotation autour de son propre axe.

La liaison constituée du filetage hélicoïdal interne 314 du manchon 302 et du filetage hélicoïdal externe 316 de la tige 300 provoque le déplacement de cette dernière en mouvement de translation vers l'extérieur de la caisse 1 du véhicule. De manière symétrique, la tige 400 est entraînée en translation vers l'extérieur de la caisse 1 du véhicule

En position ouverte, telle qu'illustrée sur la figure 3, le hayon 2 est décalé vers l'extérieur par rapport à l'axe horizontal 108, de telle sorte qu'il n'interfère pas avec les éléments de la caisse 1 du véhicule tels que le pare-choc arrière 100. Lors de la fermeture du hayon, les mêmes éléments coopèrent ensemble selon le principe qui vient d'être décrit.

En résumé, le hayon 2 a été entraîné selon un mouvement constitué d'une rotation et d'une translation.

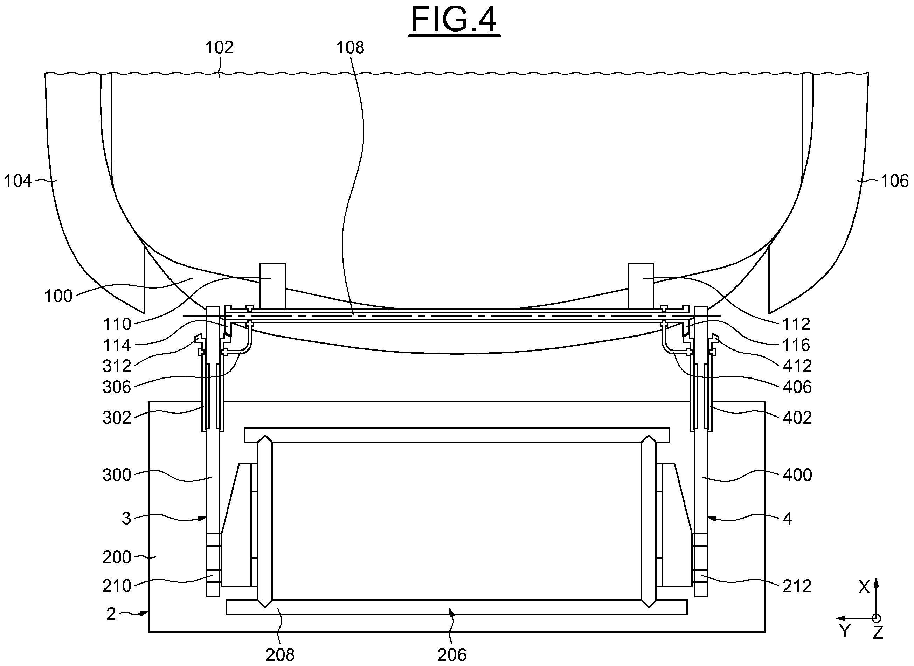

La figure 4 représente un deuxième mode de réalisation de l'invention. Ce mode de réalisation diffère du premier par la façon dont les liens mécaniques sont fixés au hayon 2. Les éléments identiques ou similaires ont la même référence.

Le hayon 2 représenté sur la figure 4 comprend un unique membre de fixation 206 incorporé à l'intérieur de la paroi interne 200 du hayon 2. L'unique membre de fixation 206 comprend un cadre 208 et deux manchons de fixation 210 et 212. Les manchons de fixation 210 et 212 sont conçus de manière à pouvoir être fixés respectivement aux tiges 300 et 400.

Au moyen d'un tel membre de fixation 210, les tiges 300 et 400 sont solidaires l'une de l'autre. Cela permet une synchronisation de la rotation des liens mécaniques 3 et 4, ce qui se traduit par une meilleure ouverture ou une meilleure fermeture du hayon 2.

En outre, un unique membre de fixation peut améliorer la résistance du hayon, en particulier lorsqu'on applique une masse importante sur le hayon lorsque celui-ci est en position ouverte.

Cette invention fournit une solution pour incorporer un hayon sur un véhicule sans modifier la conception de son pare-choc arrière.

En conséquence, il devient possible de réduire les coûts de développement et de production. L'aspect esthétique du véhicule et la sécurité des passagers, des bagages, des biens et des marchandises transportés peuvent être améliorés.

## Revendications

1. Véhicule automobile comprenant une caisse (1) comportant un pare-choc arrière (100), un hayon (2) disposé à proximité du côté supérieur du pare-choc arrière (100), le hayon (2) étant lié à la caisse (1) au moyen d'au moins un lien mécanique (3, 4) capable de pivoter autour d'un axe horizontal (108), **caractérisé en ce que** le lien mécanique (3, 4) comprend une tige (300, 400) solidaire du hayon (2) et libre de se déplacer en translation à l'intérieur d'un manchon rotatif (302, 402) pouvant être actionné par le mouvement de rotation du lien mécanique (3, 4) autour de l'axe horizontal (108), le mouvement de rotation du manchon rotatif (302) autour de l'axe horizontal (108) entraînant la rotation du manchon (302) autour de son propre axe, la rotation du manchon rotatif (302) autour de son propre axe entraînant la tige (300) en translation par rapport au manchon (302).

2. Véhicule automobile selon la revendication 1, **caractérisé en ce que** l'axe horizontal (108) et le manchon rotatif (302, 402) comprennent respectivement un premier pignon conique (114, 116) et un deuxième pignon conique (312, 412), les premier et deuxième pignons coniques (114 et 312, 116 et 412) étant capables d'engrener l'un avec l'autre.

3. Véhicule automobile selon l'une des revendications 1 et 2, dans lequel la tige (300, 400) comprend un filetage hélicoïdal externe (314, 414), le manchon rotatif (302, 402) comprenant un filetage hélicoïdal interne (316, 416), les filetages hélicoïdaux externe et interne (314 et 316, 414 et 416) étant tous deux capables d'engrener l'un avec l'autre.

4. Véhicule automobile selon l'une quelconque des revendications 1 à 3, dans lequel un bras de guidage (306, 406) est disposé entre l'axe horizontal (108) et le manchon rotatif (302, 402), le bras de guidage (306, 406) comprenant un premier palier rotatif (308, 408) lié à l'axe horizontal (108) et un deuxième palier rotatif (310, 410) lié au manchon rotatif (302, 402).

5. Véhicule automobile selon l'une quelconque des revendications 1 à 4, dans lequel l'axe horizontal (108) s'étend sur la partie arrière de la caisse (1) du véhicule, le hayon (2) étant relié à la caisse (1) par deux liens mécaniques symétriques (3, 4), chaque lien mécanique (3, 4) étant disposé à une extrémité de l'axe horizontal (108).

6. Véhicule automobile selon la revendication 5, dans lequel les tiges (300, 400) des deux liens mécaniques (3, 4) sont montées solidaires d'un membre de fixation commun (206) incorporé à l'intérieur du hayon (2).

## Patentansprüche

1. Kraftfahrzeug, umfassend eine Karosserie (1) mit einem hinteren Stoßfänger (100), eine Heckklappe (2), die in der Nähe der Oberseite des hinteren Stoßfängers (100) angeordnet ist, wobei die Heckklappe (2) mit der Karosserie (1) mit Hilfe zumindest einer mechanischen Verbindung (3, 4) verbunden ist, die um eine horizontale Achse (108) schwenkbar ist, **dadurch gekennzeichnet, dass** die mechanische Verbindung (3, 4) eine Stange (300, 400) umfasst, die fest mit der Heckklappe (2) verbunden und innerhalb einer Drehhülse (302, 402), die durch die Drehbewegung der mechanischen Verbindung (3, 4) um die horizontale Achse (108) betätigt werden kann, translatorisch verschiebbar ist, wobei die Drehbewegung der Drehhülse (302) um die horizontale Achse (108) die Drehung der Hülse (302) um ihre eigene Achse bewirkt, wobei die Drehung der Drehhülse (302) um ihre eigene Achse eine Translationsbewegung der Stange (300) relativ zur Hülse (302) bewirkt.

2. Kraftfahrzeug nach Anspruch 1, **dadurch gekennzeichnet, dass** die horizontale Achse (108) und die Drehhülse (302, 402) jeweils ein erstes Kegelrad (114, 116) und ein zweites Kegelrad (312, 412) umfassen, wobei das erste und das zweite Kegelrad (114 und 312, 116 und 412) ineinandergreifen können.

3. Kraftfahrzeug nach einem der Ansprüche 1 und 2, wobei die Stange (300, 400) ein schraubenförmiges Außengewinde (314, 414) umfasst, die Drehhülse (302, 402) ein schraubenförmiges Innengewinde (316, 416) umfasst und das schraubenförmige Außengewinde und das schraubenförmige Innengewinde (314 und 316, 414 und 416) beide ineinandergreifen können.

4. Kraftfahrzeug nach einem der Ansprüche 1 bis 3, wobei zwischen der horizontalen Achse (108) und der Drehhülse (302, 402) ein Führungsarm (306, 406) angeordnet ist, wobei der Führungsarm (306, 406) ein mit der horizontalen Achse (108) verbundenes erstes Drehlager (308, 408) und ein mit der Drehhülse (302, 402) verbundenes zweites Drehlager (310, 410) umfasst.

5. Kraftfahrzeug nach einem der Ansprüche 1 bis 4, wobei sich die horizontale Achse (108) über den hinteren Teil der Karosserie (1) des Fahrzeugs erstreckt, wobei die Heckklappe (2) mit der Karosserie (1) durch zwei symmetrische mechanische Verbindungen (3, 4) verbunden ist, wobei jede mechanische Verbindung (3, 4) an einem Ende der horizontalen Achse (108) angeordnet ist.

6. Kraftfahrzeug nach Anspruch 5, wobei die Stangen (300, 400) der beiden mechanischen Verbindungen (3, 4) fest mit einem im Inneren der Heckklappe (2) eingebauten gemeinsamen Befestigungselement (206) montiert sind.

## Claims

1. Motor vehicle comprising a bodyshell (1) comprising a rear bumper (100), a tailgate (2) arranged in proximity to the upper side of the rear bumper (100), the tailgate (2) being coupled to the bodyshell (1) by means of at least one mechanical coupling (3, 4) capable of pivoting about a horizontal shaft (108), **characterized in that** the mechanical coupling (3, 4) comprises a rod (300, 400) secured to the tailgate (2) and free to move translationally inside a rotary sleeve (302, 402) that can be actuated by the rotational movement of the mechanical coupling (3, 4) about the horizontal shaft (108), the rotational movement of the rotary sleeve (302) about the horizontal shaft (108) causing the sleeve (302) to rotate about its own axis, the rotation of the sleeve (302) about its own axis causing a translational movement of the rod (300) with respect to the sleeve (302).

2. Motor vehicle according to Claim 1, **characterized in that** the horizontal shaft (108) and the rotary sleeve (302, 402) respectively comprise a first bevel gear (114, 116) and a second bevel gear (312, 412), the first and second bevel gears (114 and 312, 116 and 412) being capable of meshing with one another.

3. Motor vehicle according to one of Claims 1 and 2, in which the rod (300, 400) comprises an external helicoidal screw thread (314, 414), the rotary sleeve (302, 402) comprising an internal helicoidal screw thread (316, 416), the external and internal helicoidal screw threads (314 and 316, 414 and 416) both being capable of meshing with one another.

4. Motor vehicle according to any one of Claims 1 to 3, in which a guide arm (306, 406) is arranged between the horizontal shaft (108) and the rotary sleeve (302, 402), the guide arm (306, 406) comprising a first rotary bearing (308, 408) coupled to the horizontal shaft (108) and a second rotary bearing (310, 410) coupled to the rotary sleeve (302, 402).

5. Motor vehicle according to any one of Claims 1 to 4, in which the horizontal shaft (108) extends over the rear part of the bodyshell (1) of the vehicle, the tailgate (2) being coupled to the bodyshell (1) by two symmetrical mechanical couplings (3, 4), each mechanical coupling (3, 4) being arranged at one end of the horizontal shaft (108).

6. Motor vehicle according to Claim 5, in which the rods (300, 400) of the two mechanical couplings (3, 4) are mounted secured to a common fixing member (206) incorporated into the tailgate (2).
